Europäisches Patentamt

European Patent Office

Office européen des brevets

(11) Numéro de publication: **0 273 829**
**A2**

# (12) DEMANDE DE BREVET EUROPEEN

(21) Numéro de dépôt: 87402999.4

(22) Date de dépôt: 30.11.87

(51) Int. Cl.⁴: **B 29 C 71/00**

(30) Priorité: 02.12.86 FR 8616836

(43) Date de publication de la demande:
06.07.88 Bulletin 88/27

(84) Etats contractants désignés: **ES**

(71) Demandeur: **SOLOMAT S.A. Société dite:**
**Avenue de la Division Leclerc**
**F-91160 Ballainvilliers (Essonne) (FR)**

(72) Inventeur: **Ibar, Jean-Pierre**
**Avenue de la Division Leclerc**
**F-91160 Ballainvilliers (Essonne) (FR)**

(74) Mandataire: **Cabinet Pierre HERRBURGER**
**115, Boulevard Haussmann**
**F-75008 Paris (FR)**

(54) **Procédé de préconditionnement d'une matière plastique par polarisation avant sa mise en forme et produit obtenu par ce procédé.**

(57)  a) Procédé de préconditionnement d'une matière plastique par polarisation avant sa mise en forme,

b) Procédé caractérisé en ce qu'on presse ou on extrude une matière en forme du tube (film) ou de tige, on soumet cette matière à une polarisation en sortie de ce stade de presse ou d'extrudeuse avant la mise en forme de cette matière.

c) L'invention concerne les industries de transformation notamment de matière plastique.

EP 0 273 829 A2

## Description

"Procédé de préconditionnement d'une matière plastique par polarisation avant sa mise en forme et produit obtenu par ce procédé".

La présente invention concerne un procédé de préconditionnement de la matière plastique avant sa mise en forme.

Il est connu que les caractéristiques de certaines matières synthétiques peuvent être modifiées par polarisation.

Toutefois, cette polarisation qui ne peut se faire que sur de petits échantillons, n'est pas utilisable à l'échelon industriel.

La présente invention a pour but de créer un procédé de préconditionnement permettant de modifier les caractéristiques de la matière avant sa mise en forme par exemple par injection pour améliorer les propriétés des produits fabriqués et notamment dans le but d'améliorer la tenue de récipients aux gaz dissous dans les liquides tels que des boissons.

A cet effet, l'invention concerne un procédé de préconditionnement, caractérisé en ce qu'on presse ou extrude une matière en forme de tube (film) ou de tige, on soumet cette matière à une polarisation en sortie de ce stade de presse ou d'extrudeuse avant la mise en forme de cette matière.

La mise en forme de la matière peut se faire par extrusion, injection par soufflage ou par pressage.

Le procédé permet d'appliquer à la matière un traitement électrique (champ électrique) polarisant les chaînes de manière à réaliser dans la matière mise en forme des produits tels qu'un récipient, bouteille, etc.... une barrière à la diffusion d'un gaz tel que le gaz carbonique ($CO_2$) contenu dans un liquide et notamment dans une boisson gazeuse.

Il est à remarquer que le champ électrique de polarisation est un champ non variable mais que le générateur appliquant ce champ peut également engendrer un champ variable notamment alternatif, qui permet de réchauffer la matière à préconditionner avant de la polariser. Il est à noter que la polarisation s'effectue de façon préférentielle à chaud pour favoriser l'orientation des dipoles dans une direction perpendiculaire à sa paroi (dans le cas des récipients).

L'installation pour la mise en oeuvre du procédé est également relativement simple et peut s'adapter sur des installations existantes.

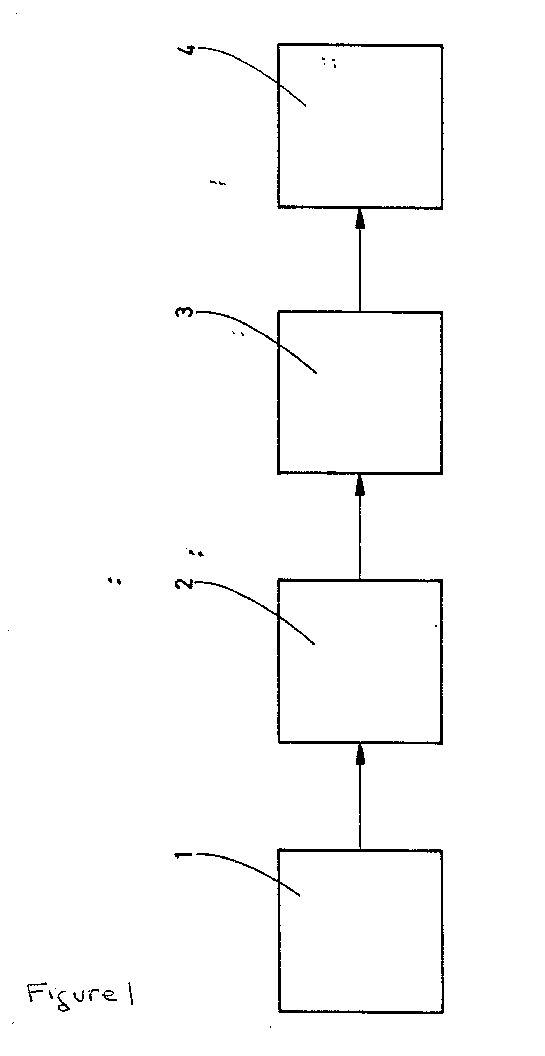

L'invention sera décrite de façon plus détaillée à l'aide de l'unique figure annexée qui est un schéma bloc du procédé.

Selon la figure, on extrude (1) de la matière que l'on soumet directement à une polarisation (2) par un champ électrique de manière à orienter les chaînes et former dans la matière une barrière s'opposant à la diffusion d'un gaz.

La mise en forme (3) de la matière se fait après cette polarisation. Il s'agit de moulage, de pressage, d'injection ou d'extrusion.

Puis on laisse se refroidir (4) le produit ainsi réalisé.

## Revendications

1o) Procédé de préconditionnement d'une matière plastique avant sa mise en forme, caractérisé en qu'on presse ou on extrude une matière en forme de tube (film) ou de tige, on soumet cette matière à une polarisation en sortie de ce stade de presse ou d'extrudeuse avant la mise en forme de cette matière.

2o) Procédé selon la revendication 1, caractérisé en ce que la mise en forme de la matière consiste è extruder, injecter, mouler ou presser des produits.

3o) Produit caractérisé en ce qu'il est obtenu par la mise en oeuvre du procédé selon l'une quelconque des revendications 1 et 2.

Figure 1

0.73829